(19) 

Europäisches
Patentamt
European
Patent Office
Office européen
des brevets

(11) **EP 4 770 140 A1**

(12) # EUROPEAN PATENT APPLICATION
published in accordance with Art. 153(4) EPC

(43) Date of publication:
**01.07.2026   Bulletin 2026/27**

(21) Application number: **24867078.8**

(22) Date of filing: **23.07.2024**

(51) International Patent Classification (IPC):
**H04W 4/02** (2018.01)

(52) Cooperative Patent Classification (CPC):
**H04W 4/02; H04W 64/00**

(86) International application number:
**PCT/CN2024/107017**

(87) International publication number:
**WO 2025/060661 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **19.09.2023   CN 202311214686**

(71) Applicant: **HUAWEI TECHNOLOGIES CO., LTD.
Shenzhen 518129 (CN)**

(72) Inventors:
• **LI, Jun
  Shenzhen, Guangdong 518129 (CN)**

• **LI, Chao
  Shenzhen, Guangdong 518129 (CN)**
• **YAO, Chuting
  Shenzhen, Guangdong 518129 (CN)**
• **ZHANG, Mengchen
  Shenzhen, Guangdong 518129 (CN)**
• **HUANG, Su
  Shenzhen, Guangdong 518129 (CN)**

(74) Representative: **Gill Jennings & Every LLP
The Broadgate Tower
20 Primrose Street
London EC2A 2ES (GB)**

(54) **METHOD FOR POSITIONING, AND APPARATUS**

(57)    This application provides a method for positioning and an apparatus. The method for positioning includes: A first terminal device receives first indication information from a network device, and when the first terminal device needs to report a first measurement quantity, the first terminal device may determine, based on the first indication information, positioning reference signals associated with the first measurement quantity, so that the first terminal device can obtain and report the first measurement quantity by measuring the determined positioning reference signals associated with the first measurement quantity. The first measurement quantity is used for determining a distance between the first terminal device and the second terminal device, to assist in positioning a terminal device. The terminal device may determine, based on the first indication information, the positioning reference signals associated with the measurement quantity, to avoid redundancy in reported measurement quantities caused by the terminal device determining the reporting of the measurement quantity.

FIG. 7

EP 4 770 140 A1

## Description

This application claims priority to Chinese Patent Application No. 202311214686.X, filed with the China National Intellectual Property Administration on September 19, 2023 and entitled "METHOD FOR POSITIONING AND APPARATUS", which is incorporated herein by reference in its entirety.

## TECHNICAL FIELD

Embodiments of this application relate to the communication field, and more specifically, to a method for positioning and an apparatus.

## BACKGROUND

In a 5th generation (5th generation, 5G) mobile communication technology, standardization is being performed for sidelink (sidelink, SL) positioning. Currently, it has been decided in the standard that a round-trip time (round-trip time, RTT) based solution is to be introduced to implement positioning in an SL scenario.

A measurement quantity in an execution process of the RTT based positioning solution in the SL communication scenario is different from a measurement quantity defined in a current 3rd Generation Partnership Project (3rd Generation Partnership Project, 3GPP) air interface communication scenario. Specifically, the measurement quantity of an RTT based positioning method defined in the 3GPP air interface communication scenario is a receive-transmit time difference (Rx-Tx time difference), for example, a receiving moment ($T_{UE-RX}$) minus a transmitting moment ($T_{UE-TX}$).

Specifically, to implement double sided RTT, a network device may request, by using higher layer signaling, a terminal device to report a plurality of receive-transmit time differences. However, because positioning reference signals (positioning reference signals, PRSs) associated with different receive-transmit time differences are determined by the terminal device, redundancy in reported measurement quantities may be caused. Therefore, how to reduce the redundancy in the reported measurement quantities becomes an urgent problem to be resolved.

## SUMMARY

This application provides a method for positioning, to reduce redundancy in reported measurement quantities.

According to a first aspect, a method for positioning is provided. The method may be performed by a first terminal device, or may be performed by a component (for example, a chip or a circuit) of the first terminal device. This is not limited in this application.

The method for positioning includes: receiving first indication information, where the first indication information is used for determining positioning reference signals associated with a first measurement quantity, and the first measurement quantity is used for determining a distance between the first terminal device and a second terminal device; determining, based on the first indication information, the positioning reference signals associated with the first measurement quantity, and measuring the positioning reference signals associated with the measurement quantity, to obtain the first measurement quantity, where the positioning reference signals associated with the first measurement quantity include a first positioning reference signal received by the first terminal device and a second positioning reference signal sent by the first terminal device.

Based on the foregoing technical solution, before measuring and reporting the first measurement quantity, the first terminal device receives the first indication information, where the first indication information is used for determining the positioning reference signals associated with the first measurement quantity. Therefore, after determining, based on the first indication information, the positioning reference signals associated with the first measurement quantity, the first terminal device may measure the positioning reference signals associated with the first measurement quantity, to obtain and report the first measurement quantity, so as to avoid, when a terminal device cannot learn of the positioning reference signals associated with the measurement quantity, redundancy in reported measurement quantities caused by the terminal device determining the positioning reference signals associated with the measurement quantity.

For example, if the first terminal device does not receive the first indication information, in a process of obtaining the measurement quantity, the first terminal device may determine, based on a received positioning reference signal and a sent positioning reference signal, measurement quantities corresponding to different combinations of received positioning reference signals and sent positioning reference signal, and report the measurement quantities. In this technical solution, in the process of obtaining the measurement quantity, the first terminal device refers to an indication of the first indication information. The positioning reference signals associated with the measurement quantity obtained by the first terminal device need to meet a specification indicated by the first indication information. Therefore, redundancy in reported measurement quantities can be reduced to some extent.

With reference to the first aspect, in some implementations of the first aspect, the first indication information indicates a quantity N of sent positioning reference signals associated with the first positioning reference signal, and the second positioning reference signal is one of the sent positioning reference signals associated with the first positioning reference signal; or the first indication information indicates a quantity N of received positioning reference signals associated with the second positioning reference signal, and the first positioning reference signal is one of the received positioning reference signals associated with the second positioning reference signal, where N is a positive integer.

Based on the foregoing technical solution, the first indication information may indicate a quantity N of sent positioning reference signals associated with a received positioning reference signal, or indicate a quantity N of received positioning reference signals associated with a sent positioning reference signal, to specify that received positioning reference signals and sent positioning reference signals associated with different measurement quantities need to meet the specification indicated by the first indication information, so as to avoid redundancy in reported measurement quantities caused by the first terminal device determining, in a process of obtaining the measurement quantities, the received positioning reference signals and the sent positioning reference signals that are associated with the measurement quantities.

With reference to the first aspect, in some implementations of the first aspect, the sent positioning reference signals associated with the first positioning reference signal are N sent positioning reference signals that are nearest in time to the first positioning reference signal received by the first terminal device; and the received positioning reference signals associated with the second positioning reference signal are N received positioning reference signals that are nearest in time to the second positioning reference signal sent by the first terminal device.

Based on the foregoing technical solution, the sent positioning reference signals that are associated with the received positioning reference signal and that are indicated by the first indication information may be sent positioning reference signals that are nearest in time to the received positioning reference signal. To be specific, in addition to indicating the quantity of sent positioning reference signals associated with the received positioning reference signal, the first indication information may further specify a location of the sent positioning reference signal associated with the received positioning reference signal.

With reference to the first aspect, in some implementations of the first aspect, the first indication information indicates a quantity N1 of positioning reference signals that are associated with the first positioning reference signal and that are sent before the first positioning reference signal, and indicates a quantity N2 of positioning reference signals that are associated with the first positioning reference signal and that are sent after the first positioning reference signal. N1 and N2 are integers, a sum of N1 and N2 is a positive integer, and the second positioning reference signal is one of the sent positioning reference signals associated with the first positioning reference signal.

With reference to the first aspect, in some implementations of the first aspect, the N1 sent positioning reference signals associated with the first positioning reference signal are N1 sent positioning reference signals that are nearest in time before the first terminal device receives the first positioning reference signal, and the N2 sent positioning reference signals associated with the first positioning reference signal are N2 sent positioning reference signals that are nearest in time after the first terminal device receives the first positioning reference signal.

With reference to the first aspect, in some implementations of the first aspect, the first indication information indicates a quantity N1 of positioning reference signals that are associated with the second positioning reference signal and that are received before the second positioning reference signal, and indicates a quantity N2 of positioning reference signals that are associated with the second positioning reference signal and that are received after the second positioning reference signal, where N1 and N2 are integers, a sum of N1 and N2 is a positive integer, and the first positioning reference signal is one of the received positioning reference signals associated with the second positioning reference signal.

With reference to the first aspect, in some implementations of the first aspect, the N1 received positioning reference signals associated with the second positioning reference signal are N1 received positioning reference signals that are nearest in time before the first terminal device sends the second positioning reference signal, and the N2 received positioning reference signals associated with the second positioning reference signal are N2 received positioning reference signals that are nearest in time after the first terminal device sends the second positioning reference signal.

With reference to the first aspect, in some implementations of the first aspect, the first indication information includes a bitmap. The bitmap includes Q bits. The Q bits correspond to Q positioning reference signals. The bitmap indicates the sent positioning reference signal associated with the first positioning reference signal, and the second positioning reference signal is one of positioning reference signals that are in the Q positioning reference signals and whose corresponding bit values are a first value; or the bitmap indicates the received positioning reference signal associated with the second positioning reference signal, and the first positioning reference signal is one of positioning reference signals that are in the Q positioning reference signals and whose corresponding bit values are a first value.

Based on the foregoing technical solution, the first indication information may be the bitmap. An association relationship between the positioning reference signals is indicated in a form of the bitmap. This indicates that there are a plurality of forms of the first indication information, not limited to the foregoing quantities (for example, N, N1, and N2), or the form of the first indication information may be the form of the bitmap, so that flexibility of the solution is improved.

With reference to the first aspect, in some implementations of the first aspect, the first indication information indicates that a quantity of positioning reference signals received or sent by the first terminal device between the first positioning reference signal and the second positioning reference signal is less than or equal to a first threshold.

Based on the foregoing technical solution, the first indication information may indicate that a requirement that a quantity of positioning reference signals in an interval between the received positioning reference signal and the sent positioning reference signal that are associated with the measurement quantity is less than or equal to the first threshold is met, to specify that received positioning reference signals and sent positioning reference signals that are associated with different measurement quantities need to meet the specification indicated by the first indication information, so as to avoid redundancy in reported measurement quantities caused by the first terminal device determining, in a process of obtaining the measurement quantities, the received positioning reference signals and the sent positioning reference signals that are associated with the measurement quantities.

With reference to the first aspect, in some implementations of the first aspect, the first indication information indicates that a time interval between the first positioning reference signal and the second positioning reference signal is less than or equal to a second threshold.

Based on the foregoing technical solution, the first indication information may indicate that the time interval between the received positioning reference signal and the sent positioning reference signal that are associated with the measurement quantity is less than or equal to the second threshold, to specify that received positioning reference signals and sent positioning reference signals that are associated with different measurement quantities need to meet the specification indicated by the first indication information, so as to avoid redundancy in reported measurement quantities caused by the first terminal device determining, in a process of obtaining the measurement quantities, the received positioning reference signals and the sent positioning reference signals that are associated with the measurement quantities.

With reference to the first aspect, in some implementations of the first aspect, the first indication information is further used for determining a first time window. The positioning reference signals associated with the first measurement quantity are within the first time window. The first time window is one of M time windows. M is a positive integer. The first indication information further indicates at least one of the following information: a window length of the first time window, a total quantity M of time windows, or a start moment of the first time window.

Based on the foregoing technical solution, the first indication information may further indicate a range of the first time window, to specify that the positioning reference signals associated with the first measurement quantity are within the first time window, so as to avoid redundancy in reported measurement quantities caused by the first terminal device determining, through association of positioning reference signals within different time windows in a process of obtaining the measurement quantities, the received positioning reference signal and the sent positioning reference signal that are associated with the measurement quantity.

With reference to the first aspect, in some implementations of the first aspect, a start moment of the M time windows is a moment at which the first terminal device receives the first indication information; and an end moment of the M time windows is a moment at which the first terminal device reports the first measurement quantity.

With reference to the first aspect, in some implementations of the first aspect, the method further includes: receiving a request message, where the request message is used for requesting to report the first measurement quantity, the request message includes response time information, and the response time information indicates to report the first measurement quantity within response time after the request message is received. The start moment of the M time windows is a moment at which the request message is received, and the end moment of the M time windows is a moment obtained by delaying, by the response time, the moment at which the request message is received.

With reference to the first aspect, in some implementations of the first aspect, the first indication information is carried in a radio resource control RRC message, an LTE positioning protocol LPP message, or a sidelink positioning protocol SLPP message.

According to a second aspect, a method for positioning is provided. The method may be performed by a network device, or may be performed by a component (for example, a chip or a circuit) of the network device. This is not limited in this application.

The method for positioning includes: generating first indication information, where the first indication information is used for determining positioning reference signals associated with a first measurement quantity, and the first measurement quantity is used for determining a distance between a first terminal device and a second terminal device; and sending the first indication information, where the positioning reference signals associated with the first measurement quantity include a first positioning reference signal received by the first terminal device and a second positioning reference signal sent by the first terminal device.

Specifically, for descriptions related to the first indication information, refer to the descriptions about the first indication information in the first aspect. Details are not described herein again. In addition, for descriptions related to information, refer to the descriptions about the indication information in the first aspect. Details are not described herein again.

For technical effects of the method shown in the second aspect and the possible designs of the second aspect, refer to the technical effects in the first aspect and the possible designs of the first aspect.

According to a third aspect, a terminal device is provided. The terminal device is configured to perform any one of the first aspect and the implementations of the first aspect. Specifically, the terminal device includes a processor and a memory. The memory is configured to store a computer program. The processor is configured to invoke the computer program from the memory and run the computer program, so that the terminal device performs any one of the first aspect and the implementations of the first aspect.

According to a fourth aspect, a network device is provided. The network device is configured to perform any one of the second aspect and the implementations of the second aspect. Specifically, the network device includes a processor and a memory. The memory is configured to store a computer program. The processor is configured to invoke the computer program from the memory and run the computer program, so that the network device performs any one of the second aspect and the implementations of the second aspect.

According to a fifth aspect, a communication apparatus is provided. The communication apparatus is configured to perform the method provided in any one of the first aspect and the second aspect and the implementations of the first aspect and the second aspect. Specifically, the communication apparatus may include units and/or modules (such as processing units and transceiver units) configured to perform the method provided in any one of the first aspect and the second aspect and the implementations of the first aspect and the second aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, this application provides a processor, configured to perform the method provided in the first aspect and the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores a computer program. When the computer program runs on a communication apparatus, the communication apparatus is caused to perform the method in any one of the implementations of the first aspect and the second aspect.

According to an eighth aspect, a computer program product including instructions is provided. When the computer program product runs on a computer, the computer is caused to perform the method provided in any one of the implementations of the first aspect and the second aspect.

According to a ninth aspect, a chip is provided. The chip includes a processor and a communication interface. The processor reads instructions through the communication interface, to perform the method provided in any one of the implementations of the first aspect and the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect and the second aspect.

According to a tenth aspect, a communication system is provided, including the terminal device in the third aspect and the network device in the fourth aspect.

**BRIEF DESCRIPTION OF DRAWINGS**

FIG. 1 is a diagram of a scenario according to an embodiment of this application;
FIG. 2 is a diagram of an RTT based positioning method;
FIG. 3 is a diagram of a DS-RTT based positioning method;
FIG. 4 is a diagram of PRS sending in a general-form DS-RTT based positioning method according to an embodiment of this application;
FIG. 5 is a diagram of a measurement quantity according to an embodiment of this application;
FIG. 6 is a diagram of reporting a measurement quantity by a terminal device according to an embodiment of this application;

FIG. 7 is a schematic flowchart of a method for positioning according to an embodiment of this application;

FIG. 8 is a diagram of a configuration according to an embodiment of this application;

FIG. 9 is a diagram of another configuration according to an embodiment of this application;

FIG. 10 is a diagram of still another configuration according to an embodiment of this application;

FIG. 11 is a diagram of still another configuration according to an embodiment of this application;

FIG. 12 is a diagram of still another configuration according to an embodiment of this application;

FIG. 13 is a diagram of still another configuration according to an embodiment of this application;

FIG. 14 is a block diagram of a communication apparatus according to an embodiment of this application;

FIG. 15 is a diagram of another communication apparatus according to an embodiment of this application; and

FIG. 16 is a diagram of a chip system according to an embodiment of this application.

## DESCRIPTION OF EMBODIMENTS

For ease of understanding embodiments of this application, the following points are first described.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated together, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, terms such as "S710" are merely identifiers for ease of description, and do not limit a sequence of performing steps.

Third, in embodiments of this application, terms such as "example" or "for example" are used to give an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a relative concept in a specific manner.

Fourth, "being stored" in embodiments of this application may mean "being stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, "of (of)", "corresponding/relevant (corresponding/relevant)", "corresponding (corresponding)", and "associated (associated)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that, when a difference between the three is not emphasized, meanings to be expressed are consistent.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The following describes technical solutions of this application with reference to accompanying drawings.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G mobile communication system, or a new radio (new radio, NR) access technology. The technical solutions provided in this application may be further applied to a future communication system such as a 6th generation mobile communication system.

Embodiments of this application may be applied to a terminal device. The terminal device may be a device that provides voice/data connectivity for a user, for example, a handheld device or a vehicle-mounted device with a wireless connection function; may be a device in internet of vehicles communication, for example, a communication terminal mounted on a vehicle or a roadside unit (roadside unit, RSU); may be a communication terminal mounted on an uncrewed aerial vehicle; or may be a terminal device in an internet of things (internet of things, IoT) system. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

For example, the terminal device includes but is not limited to: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile network (public land mobile network, PLMN), or the like. A specific form of the terminal device is not limited in embodiments of this application.

The technical solutions in embodiments of this application may be further applied to an access network device. The access network device may be a device that can connect a terminal device to a wireless network. The access network device may also be referred to as a radio access network (radio access network, RAN) node, a radio access network device, or a network device. For example, the access network device may be a base station.

The base station in this embodiment of this application may have various names in the following in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip arranged in the foregoing device or apparatus. The base station may alternatively be a network-side device in a 6G network, a device that performs a function of a base station in a future communication system, or the like. The base station may support networks using a same access technology or different access technologies.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

A specific technology and a specific device form that are used by the access network device are not limited in embodiments of this application.

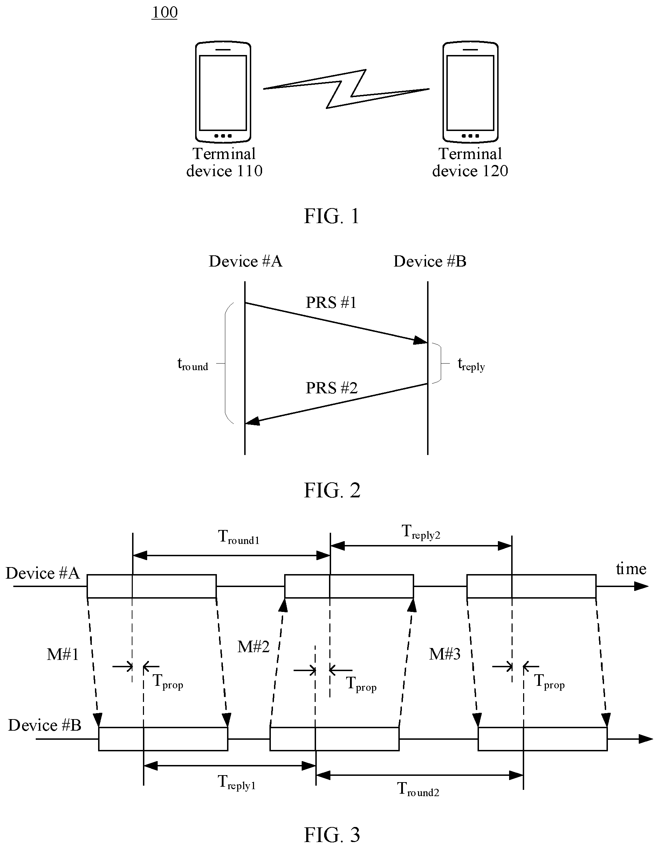

For ease of understanding embodiments of this application, FIG. 1 is first used as an example to describe an application scenario to which embodiments of this application are applicable.

FIG. 1 is a diagram of an application scenario 100 according to this application. As shown in FIG. 1, the application scenario 100 mainly relates to a sidelink positioning scenario, and a terminal device 110 and a terminal device 120 in FIG. 1 are terminal devices participating in positioning. For example, one of the terminal device 110 and the terminal device 120 is a to-be-positioned terminal device, and the other terminal device is an anchor terminal device. The terminal device 110 and the terminal device 120 may be common terminal devices such as mobile phones, or may be RSUs, or the like. Signals may be received and sent between the to-be-positioned terminal device and the anchor terminal device, and between the anchor terminal devices. Positioning measurement information may be reported to a location management function (location management function, LMF) (if any), a base station, or another device.

Specifically, a method for implementing positioning between the terminal device 110 and the terminal device 120 is described below with reference to a specific embodiment. Details are not described herein.

It should be understood that FIG. 1 shows only an example of the scenario to which a method for positioning provided in embodiments of this application can be applied, and does not constitute any limitation on the protection scope of this application. For example, the scenario shown in FIG. 1 may include at least two terminal devices, and any at least two terminal devices may be terminal devices participating in positioning. For another example, the scenario shown in FIG. 1 may further include a base station (for example, a gNB). For still another example, the scenario shown in FIG. 1 may further include a positioning management device. Specifically, the positioning management device is a device on a network side and configured to determine positioning information of the terminal device. The positioning management device may be an LMF entity, an evolved serving mobile location center (evolved serving mobile location center, E-SMLC), or another device that may be configured to determine the positioning information of the terminal device.

Further, for ease of understanding of embodiments of this application, several basic concepts in embodiments of this application are briefly described.

1. Round-trip time (Round-Trip Time, RTT) based positioning

According to an RTT based positioning method, positioning is implemented by obtaining round-trip transmission time by sending positioning reference signals (positioning reference signals, PRSs) back and forth, without clock synchronization. Specifically, reference signals are sent back and forth between two devices, so that time of flight (time of flight, TOF) between the two devices may be obtained as follows:

$$\text{TOF} = \tfrac{1}{2}\left(t_{round} - t_{reply}\right) \qquad (1\text{-}1)$$

$t_{round}$ represents interval time between a moment at which one device participating in positioning sends a positioning reference signal and a moment at which the device participating in positioning receives the positioning reference signal. $t_{reply}$ represents interval time between a moment at which another device participating in positioning sends a positioning reference signal and a moment at which the device participating in positioning receives the positioning reference signal.

Further, a distance between the two devices may be obtained by multiplying the TOF by the speed of light. FIG. 2 is a diagram of an RTT based positioning method.

It can be learned from FIG. 2 that PRSs are sent back and forth between devices participating in positioning (for example, a device #A and a device #B shown in FIG. 2), and a distance between the device #A and the device #B may be obtained.

2. Trilateration

The trilateration is a mathematical principle that two or more detectors are used to detect an orientation of a target in different positions, and then a position and a distance of the target are determined according to a triangular geometry principle.

According to the foregoing RTT based positioning principle, distances from a to-be-positioned device to three base stations are obtained by separately performing an RTT process between the to-be-positioned device and the three base stations, and then trilateration may be performed. For example, an RTT process is performed between a to-be-positioned mobile device and three base stations separately: A base station #1 and the mobile device send a PRS #1 back and forth to obtain a distance #1 between the base station #1 and the mobile device; a base station #2 and the mobile device send a PRS #2 back and forth to obtain a distance #2 between the base station #2 and the mobile device; a base station #3 and the mobile device send a PRS #3 back and forth to obtain a distance #3 between the base station #3 and the mobile device, and then trilateration may be performed after the distances to the three base stations are obtained.

3. Clock drift phenomenon

The clock drift phenomenon means that an actual frequency of a crystal oscillator deviates from a nominal frequency, causing a deviation between time recorded by a device and actual time, and the deviation increases with an increase in time. When the crystal oscillator has an error $e_1$, if the actual time $t$ elapses, the time recorded by the device is $t(1 + e_1)$. That is, the error increases with the increase in time $t$.

Although the RTT based solution does not require strict synchronization between devices, different devices cause different clock drifts. It is assumed that the device #A in FIG. 2 has a clock crystal oscillator error $e_A$, and the device #B has a clock crystal oscillator error $e_B$. In this case, actually estimated TOF is:

$$\begin{aligned}
\mathrm{TOF} &= \frac{1}{2}\left(t_{round} - t_{reply}\right) \\
&= \frac{1}{2}\left[\bar{t}_{round}(1 + e_A) - \bar{t}_{reply}(1 + e_B)\right] \\
&= \overline{\mathrm{TOF}} + \frac{1}{2}\left(\bar{t}_{round} \cdot e_A - \bar{t}_{reply} \cdot e_B\right) \\
&= \overline{\mathrm{TOF}} + \frac{1}{2}\bar{t}_{reply}(e_A - e_B) + \overline{\mathrm{TOF}} \cdot e_A
\end{aligned} \qquad (1\text{-}2)$$

The upper horizontal line in Equation (1-2) represents a true value.

Therefore, in comparison with true $\overline{\mathrm{TOF}}$, the estimated TOF has an error $\frac{1}{2}\bar{t}_{reply}(e_A - e_B) + \overline{\mathrm{TOF}} \cdot e_A$. $e_A$ is generally on an order of magnitude of $10^{-6}$, and in an SL scenario, $\overline{\mathrm{TOF}}$ is usually on the order of nanoseconds. Therefore, the error $\overline{\mathrm{TOF}} \cdot e_A$ is very small and may be ignored. However, $\bar{t}_{reply}$ is usually on the order of milliseconds. Therefore, an error that is on the order of nanoseconds may be introduced into $\frac{1}{2}\bar{t}_{reply}(e_A - e_B)$ (where a radio signal of 1 nanosecond can be transmitted for 30 centimeters). Therefore, the RTT based positioning solution generally requires that response time be as short as possible to reduce a positioning error. For example, to reduce impact of the clock drift, a double sided RTT (Double Sided RTT, DS-RTT) based method is used to implement positioning in a current standard. The following describes the double sided RTT based positioning method.

4. DS-RTT based positioning method

Double sided RTT (Double Sided RRT, DS-RTT) is an extension of the RTT based positioning method. In a DS-TWR based positioning method, two times of round-trip time measurement are performed, and two periods of round-trip time are combined to obtain the TOF (for example, $T_{prop}$ shown in FIG. 3). High positioning accuracy can be maintained even with long response time.

For ease of understanding, the following describes in detail how the high positioning accuracy is maintained in the DS-TWR based positioning method.

It can be learned from FIG. 3 that, in the DS-TWR based positioning method, three messages (M#1, M#2, and M#3 shown in FIG. 3) are transmitted between the device #A and the device #B in total. A 1st message and a 2nd message may form an RTT based positioning measurement process initiated by the device #A, and the 2nd message and a 3rd message may form an RTT based positioning measurement process initiated by the device #B.

Therefore, two RTT equations are obtained:

$$\begin{cases} T_{round1} = 2\mathrm{TOF} + T_{reply1} \\ T_{round2} = 2\mathrm{TOF} + T_{reply2} \end{cases} \qquad (1\text{-}3)$$

Specifically, the following derivation is performed on Equation (1-3) to obtain a TOF expression:

$$T_{round1} \times T_{round2} = (2\mathrm{TOF} + T_{reply1})(2\mathrm{TOF} + T_{reply2}) \qquad (1\text{-}4)$$

$$T_{round1} \times T_{round2} - T_{reply1} \times T_{reply2} = 4TOF^2 + 2TOF\left(T_{reply1} + T_{reply2}\right)$$

$$= TOF\left(4TOF + 2T_{reply1} + 2T_{reply2}\right)$$

$$= TOF\left(\left(2TOF + T_{reply1}\right) + \left(2TOF + T_{reply2}\right) + T_{reply1} + T_{reply2}\right)$$

$$= TOF(T_{round1} + T_{round2} + T_{reply1} + T_{reply2}) \qquad (1\text{-}5)$$

Therefore, Equation (1-4) and Equation (1-5) are combined to obtain the TOF:

$$TOF = \frac{T_{round1} * T_{round2} - T_{reply1} * T_{reply2}}{T_{round1} + T_{round2} + T_{reply1} + T_{reply2}} \qquad (1\text{-}6)$$

Considering that the device #A and the device #B have different clock crystal oscillator errors $e_A$ and $e_B$, actual time of flight obtained through measurement is:

$$\widehat{TOF} = \frac{\left(T_{round1} * T_{round2} - T_{reply1} * T_{reply2}\right)(1 + e_A)(1 + e_B)}{T_{round1}(1 + e_A) + T_{round2}(1 + e_B) + T_{reply1}(1 + e_B) + T_{reply2}(1 + e_A)}$$

$$= \frac{\left(T_{round1} * T_{round2} - T_{reply1} * T_{reply2}\right)(1 + e_A)(1 + e_B)}{\left(T_{round1} + T_{reply2}\right)(1 + e_A) + \left(T_{round2} + T_{reply1}\right)(1 + e_B)} \qquad (1\text{-}7)$$

$T_{round1} + T_{reply2} = T_{round2} + T_{reply1}$. Therefore,

$$\widehat{TOF} = \frac{2\left(T_{round1} * T_{round2} - T_{reply1} * T_{reply2}\right)(1 + e_A)(1 + e_B)}{\left(T_{round1} + T_{reply2} + T_{round2} + T_{reply1}\right)(1 + e_A + 1 + e_B)}$$

$$= \frac{2(1 + e_A)(1 + e_B)}{2 + e_A + e_B} TOF \qquad (1\text{-}8)$$

Therefore, finally, the error introduced by the clock drift is:

$$Error = \widehat{TOF} - TOF = \frac{e_A + e_B + 2e_a e_b}{2 + e_A + e_B} TOF \approx \frac{e_A + e_B}{2} TOF \qquad (1\text{-}9)$$

Because $e_A + e_B$ is much less than 2, and $2e_a e_b$ is much less than $e_A + e_B$, this approximation is possible. It can be learned from Equation (1-9) that the error is unrelated to the response time, and is related only to $e_A, e_B$, and the TOF. Because $e_A$ and $e_B$ are generally on the order of magnitude of $10^{-6}$, and the TOF is on the order of nanoseconds, the error may be almost ignored. Therefore, it may be noted that the high positioning accuracy can be maintained in the DS-TWR based positioning method.

5. General-form DS-RTT

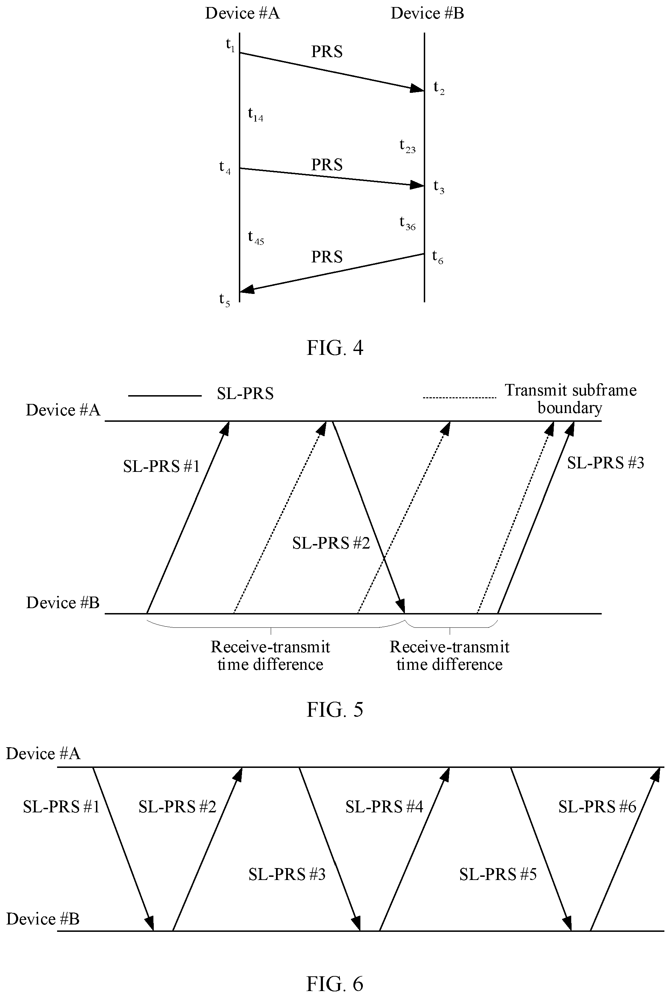

Specifically, the DS-RTT positioning may be extended to a more general form, and a sequence of the three PRSs may be adjusted flexibly. For example, the device #A sends two PRSs to the device #B, and the device #B sends one PRS to the device #A, as shown in FIG. 4.

$$\begin{cases} t_{14} = (1 + e_a)\bar{t}_{14} \\ t_{23} = (1 + e_b)\bar{t}_{23} \\ t_{45} = (1 + e_a)\bar{t}_{45} \\ t_{36} = (1 + e_b)\bar{t}_{36} \end{cases} \qquad (1\text{-}10)$$

First, $\bar{t}_{14}$ should be equal to $\bar{t}_{23}$. Therefore,

$$\frac{1 + e_a}{1 + e_b} = \frac{t_{14}}{t_{23}} \qquad (1\text{-}11)$$

The preceding equation indicates that a relationship between two clock crystal oscillator errors can be obtained by using measurement quantities $t_{14}$ and $t_{23}$.

Next, the TOF may be calculated in a new manner by using the relationship:

$$TOF = \frac{1}{2}\left(t_{45} - \frac{t_{14}}{t_{23}}t_{36}\right) \tag{1-12}$$

$$= \frac{1}{2}\left(t_{45} - \frac{1+e_a}{1+e_b}t_{36}\right)$$

$$= \frac{1}{2}\left[(1+e_a)\bar{t}_{45} - \frac{1+e_a}{1+e_b}(1+e_b)\bar{t}_{36}\right]$$

$$= \frac{1}{2}(1+e_a)(\bar{t}_{45} - \bar{t}_{36})$$

$$= (1+e_a)\overline{TOF}$$

or

$$TOF = \frac{1}{2}\left(\frac{t_{23}}{t_{14}}t_{45} - t_{36}\right) \tag{1-13}$$

$$= \frac{1}{2}\left(\frac{1+e_b}{1+e_a}t_{45} - t_{36}\right)$$

$$= \frac{1}{2}\left[\frac{1+e_b}{1+e_a}(1+e_a)\bar{t}_{45} - (1+e_b)\bar{t}_{36}\right]$$

$$= \frac{1}{2}(1+e_b)(\bar{t}_{45} - \bar{t}_{36})$$

$$= (1+e_b)\overline{TOF}$$

It can be learned that errors obtained according to the two calculation equations (for example, Equation (1-12) and Equation (1-13)) are also unrelated to the response time, and the impact of the clock drift can be effectively overcome.

6. Measurement quantity

A measurement quantity of the RTT based method defined in a current 3GPP air interface communication scenario is a terminal device receive-transmit time difference (UE Rx-Tx time difference), that is, a receive-transmit time difference is $T_{UE-RX}$-$T_{UE-TX}$. $T_{UE-RX}$ is obtained by measuring a PRS, and $T_{UE-TX}$ is obtained by using a transmit subframe boundary that is nearest in time to the measured PRS (that is, a terminal device may report the UE Rx-Tx time difference without actually sending the PRS).

However, because timing synchronization in an SL communication scenario may be adjusted, a synchronization error may be introduced in a manner of using the subframe boundary. Therefore, it is considered to modify the measurement quantity, that is, the UE Rx-Tx time difference, and adjust $T_{UE-TX}$ to time at which the PRS is actually sent, for example, a moment at which a device #B actually sends an SL-PRS #1 or an SL-PRS #3 shown in FIG. 5, or a moment at which a device #A actually sends an SL-PRS #2 shown in FIG. 5.

With reference to FIG. 1, the foregoing briefly describes a scenario to which the method for positioning provided in embodiments of this application can be applied, describes basic concepts that may be used in embodiments of this application, and describes concepts of the DS-RTT based positioning method and the measurement quantity in the basic concepts. To indicate that the DS-RTT based method is used, a method for positioning may be: requesting, by using higher layer signaling, a terminal device to report a plurality of receive-transmit time differences.

It should be understood that, when a network device requests, by using the higher layer signaling, the terminal device to report the plurality of receive-transmit time differences, because the terminal device determines which a received PRS and a sent PRS are specifically associated with different receive-transmit time differences reported by the terminal device, in the foregoing method, that the terminal device is requested, by using the higher layer signaling to report the plurality of receive-transmit time differences may have the following problems in implementing positioning by using the DS-RTT based method:

(1) PRS composition in DS-RTT is very flexible. This may cause redundancy in reported measurement quantities. For example, as shown in FIG. 6, six SL-PRSs (an SL-PRS #1, an SL-PRS #2, an SL-PRS #3, an SL-PRS #4, an SL-PRS #5, and an SL-PRS #6 shown in FIG. 6) are transmitted between a device #A and a device #B in total. Two PRSs sent by the device #A to the device #B and one PRS sent by the device #B to the device #A may form DS-RTT. As shown in FIG. 6, the SL-PRS #1, the SL-PRS #2, and the SL-PRS #3 may form DS-RTT, and the SL-PRS #1, the SL-PRS #2, and the SL-PRS #6 may also form DS-RTT. There are many similar combinations. Therefore, redundant reporting may occur when the terminal device reports the measurement quantities.

(2) Because the terminal device selects a measurement quantity for reporting, a problem that a final measurement report does not match may be caused. For example, as shown in FIG. 6, a measurement report of the device #A in FIG. 6 carries measurement quantities of {SL-PRS #2, SL-PRS #3} and {SL-PRS #3, SL-PRS #4}, and a measurement report of the device #B carries measurement quantities of {SL-PRS #1, SL-PRS #2} and {SL-PRS #1, SL-PRS #4}. As a result, the DS-RTT positioning method cannot be implemented correctly.

To resolve the problem existing in the foregoing method for positioning, this application provides a method for positioning, to implement positioning measurement while avoiding redundancy in reported measurement quantities.

The following describes the technical solutions provided in this application in detail with reference to the accompanying drawings. Embodiments of this application may be applied to a plurality of different scenarios, including but not limited to the scenario shown in FIG. 1. For example, embodiments of this application may be further applied to an uplink (uplink) or downlink (downlink) positioning scenario in a cellular network.

It should be understood that, a specific structure of an execution entity of a method provided in embodiments of this application is not specifically limited in embodiments shown below, provided that a program that records code of the method provided in embodiments of this application can be run to perform communication according to the method provided in embodiments of this application. For example, the method provided in embodiments of this application may be performed by a network device and a terminal device, or a functional module, a chip, and the like in the network device and the terminal device that can invoke the program and execute the program.

Without a loss of generality, interaction between the network device and the terminal device is used as an example below to describe in detail the method for positioning provided in embodiments of this application. Specific device types of the network device and the terminal device are not limited in the following embodiments, provided that functions of the network device and the terminal device can be performed.

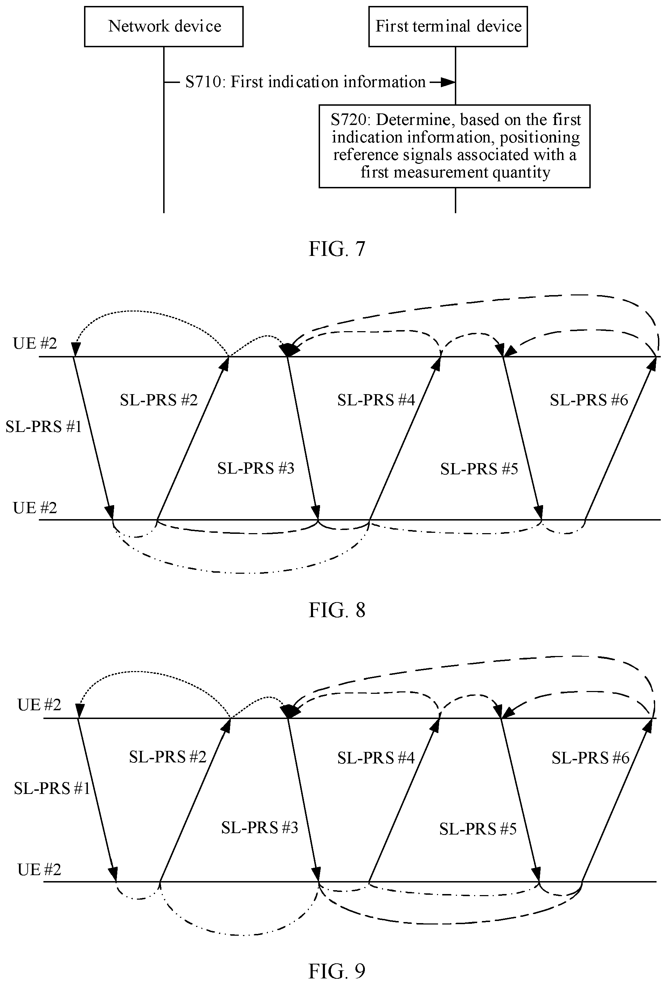

FIG. 7 is a schematic flowchart of a method for positioning according to an embodiment of this application. The method for positioning is applied to a scenario in which positioning is performed between a first terminal device and a second terminal device, and includes the following steps.

S710: A network device sends first indication information to the first terminal device. Correspondingly, the first terminal device receives the first indication information from the network device.

In this embodiment, the network device may be the foregoing LMF that implements a location management function, or another network element or device that can implement a function of the network device in this embodiment. A specific form of the network device is not limited in this embodiment. Details are not described herein.

Terminal devices (for example, the first terminal device and the second terminal device) in this embodiment may be any terminal devices that have a positioning requirement or participate in a positioning procedure. A specific form of the terminal device is not limited in this embodiment.

Specifically, the first indication information is used for determining positioning reference signals associated with a first measurement quantity. The first measurement quantity is a parameter that is measured by the first terminal device and that is used for determining a distance between the first terminal device and the second terminal device.

For example, the positioning reference signals associated with the first measurement quantity include a first positioning reference signal received by the first terminal device and a second positioning reference signal sent by the first terminal device. The first terminal device may obtain the first measurement quantity by measuring the first positioning reference signal and the second positioning reference signal.

For example, the first measurement quantity is a UE Rx-Tx time difference measured by the first terminal device. For example, the first measurement quantity is a difference between a moment at which the first terminal device receives the first positioning reference signal and a moment at which the first terminal device sends the second positioning reference signal.

For another example, the first measurement quantity is a UE Rx-Tx phase difference measured by the first terminal device. For example, the first measurement quantity is a difference between a phase of receiving the first positioning reference signal by the first terminal device and a phase of sending the second positioning reference signal by the first terminal device.

It should be noted that a specific form of the measurement quantity is not limited in this embodiment, and information that can be used for determining the distance between the first terminal device and the second terminal device may be understood as the measurement quantity in this embodiment.

In this embodiment, information about the distance between the first terminal device and the second terminal device may be used for implementing positioning measurement. For example, the first terminal device knows a location of the first terminal device, and may learn of a location of the second terminal device based on the distance between the first terminal device and the second terminal device. For another example, the LMF may learn of a location of the second terminal device based on a location of the first terminal device and the distance between the first terminal device and the second terminal device.

It should be understood that a specific process of using the measurement quantity is not limited in this embodiment. For details, refer to descriptions about using the measurement quantity in a current related technology. Details are not described herein. In this embodiment, how the terminal device determines positioning reference signals associated with the measurement quantity is mainly described, and manners of reporting and using the measurement quantity are not described in detail.

For example, the first indication information may be carried in a radio resource control (Radio Resource Control, RRC) message, an LTE positioning protocol (LTE Positioning Protocol, LPP) message, a sidelink positioning protocol (Sidelink Positioning Protocol, SLPP) message, or another message.

Further, after receiving the first indication information, the first terminal device may determine, based on the first indication information, the positioning reference signals associated with the first measurement quantity. A procedure of the method shown in FIG. 7 further includes the following steps.

S720: The first terminal device determines the positioning reference signals associated with the first measurement quantity.

For example, in this embodiment, the first indication information may assist, in the following several indication manners, the first terminal device in determining, in a process of obtaining the measurement quantity, the positioning reference signals associated with the measurement quantity.

Manner 1: The first indication information indicates a quantity N of sent positioning reference signals associated with the first positioning reference signal, where N is a positive integer. The second positioning reference signal is one of the sent positioning reference signals associated with the first positioning reference signal.

Alternatively, the first indication information indicates a quantity N of received positioning reference signals associated with the second positioning reference signal, where N is a positive integer. The first positioning reference signal is one of the received positioning reference signals associated with the second positioning reference signal.

It should be noted that the first indication information indicating a quantity N of positioning reference signals associated with a specific positioning reference signal (for example, indicating the quantity N of sent positioning reference signals associated with the first positioning reference signal, or indicating the quantity N of received positioning reference signals associated with the second positioning reference signal) may be the first indication information indicating the quantity N, or the first indication information indicating a maximum quantity N, that is, a quantity of associated positioning reference signals is less than or equal to N. In other words, in this embodiment, the first indication information may indicate the maximum quantity by indicating the quantity of positioning reference signals associated with the specific positioning reference signal. For example, if the first indication information indicates the maximum quantity of 3, the quantity of sent positioning reference signals associated with the first positioning reference signal may be less than or equal to 3.

In the case shown in Manner 1, if the first indication information indicates the quantity N of sent positioning reference signals associated with the received positioning reference signal (for example, the first positioning reference signal), that the first terminal device determines the positioning reference signals associated with the first measurement quantity includes:

The first terminal device determines, based on the received first positioning reference signal and the first indication information, sent positioning reference signals associated with the first positioning reference signal. The received first positioning reference signal and one of the sent positioning reference signals associated with the first positioning reference signal may be used as the positioning reference signals associated with the first measurement quantity.

Alternatively, if the first indication information indicates the quantity N of received positioning reference signals associated with the sent positioning reference signal (for example, the second positioning reference signal), that the first terminal device determines the positioning reference signals associated with the first measurement quantity includes:

The first terminal device determines, based on the sent second positioning reference signal and the first indication information, received positioning reference signals associated with the second positioning reference signal. The sent second positioning reference signal and one of the received positioning reference signals associated with the second positioning reference signal may be used as the positioning reference signals associated with the first measurement quantity.

In the case shown in Manner 1, the first indication information may indicate the quantity N of sent positioning reference signals associated with the received positioning reference signal, or the first indication information may indicate the quantity N of received positioning reference signals associated with the sent positioning reference signal, to specify that received positioning reference signals and sent positioning reference signals that are associated with different measurement quantities need to meet the quantity indicated by the first indication information.

Optionally, the sent positioning reference signals associated with the first positioning reference signal are N sent positioning reference signals that are nearest in time to the first positioning reference signal received by the first terminal device.

For example, when the first terminal device determines, based on the first indication information, the sent positioning reference signals associated with the first positioning reference signal, N positioning reference signals sent before the first terminal device receives the first positioning reference signal may be used as the sent positioning reference signals associated with the first positioning reference signal.

For another example, when the first terminal device determines, based on the first indication information, the sent positioning reference signals associated with the first positioning reference signal, N positioning reference signals sent after the first terminal device receives the first positioning reference signal may be used as the sent positioning reference signals associated with the first positioning reference signal.

For still another example, when the first terminal device determines, based on the first indication information, the sent positioning reference signals associated with the first positioning reference signal, N' positioning reference signals sent after the first terminal device receives the first positioning reference signal and N" positioning reference signals sent before the first terminal device receives the first positioning reference signal may be used as the sent positioning reference signals associated with the first positioning reference signal, where a sum of N' and N" is N.

Optionally, the received positioning reference signals associated with the second positioning reference signal are N received positioning reference signals that are nearest in time to the second positioning reference signal sent by the first terminal device. For a manner in which the first terminal device determines, based on the first indication information, the received positioning reference signals associated with the second positioning reference signal, refer to the foregoing manner in which the first terminal device determines, based on the first indication information, the sent positioning reference signals associated with the first positioning reference signal. Details are not described herein again.

For ease of understanding, the following describes, in the case shown in Manner 1 with reference to a specific example, how the network device configures, by using indication information (for example, the foregoing first indication information), the quantity of sent positioning reference signals associated with the received positioning reference signal, or configures, by using the indication information, the quantity of received positioning reference signals associated with the sent positioning reference signal.

Example 1: As shown in FIG. 8, the LMF may configure, for UE #1 and UE #2 by using a higher layer message (for example, the first indication information), sent SL-PRSs associated with a received SL-PRS as two sent SL-PRSs that are nearest in time to the received SL-PRS. The UE #1 and the UE #2 may measure and report measurement quantities according to a rule configured by the higher layer message.

As shown in FIG. 8, for the UE #1, received SL-PRSs include an SL-PRS #2, an SL-PRS #4, and an SL-PRS #6. Therefore, based on an indication of the higher layer message, sent SL-PRSs associated with the SL-PRS #2 include an SL-PRS #1 and an SL-PRS #3, sent SL-PRSs associated with the SL-PRS #4 include the SL-PRS #3 and an SL-PRS #5, and sent SL-PRSs associated with the SL-PRS #6 include the SL-PRS #3 and the SL-PRS #5.

For the UE #2, received SL-PRSs include the SL-PRS #1, the SL-PRS #3, and the SL-PRS #5. Therefore, based on the indication of the higher layer message, sent SL-PRSs associated with the SL-PRS #1 include the SL-PRS #2 and the SL-PRS #4, sent SL-PRSs associated with the SL-PRS #3 include the SL-PRS #2 and the SL-PRS #4, and sent SL-PRSs associated with the SL-PRS #5 include the SL-PRS #4 and the SL-PRS #6.

In the case shown in FIG. 8, for the UE #1, a positioning reference signal group that may form the DS-RTT includes {SL-PRS #1, SL-PRS #2, SL-PRS #3}, {SL-PRS #3, SL-PRS #4, SL-PRS #5}, and {SL-PRS #3, SL-PRS #5, SL-PRS #6}; and for the UE #2, a positioning reference signal group that may form the DS-RTT includes {SL-PRS #1, SL-PRS #2, SL-PRS #4}, {SL-PRS #2, SL-PRS #3, SL-PRS #4}, and {SL-PRS #4, SL-PRS #5, SL-PRS #6}. In comparison with a case in which the quantity of sent positioning reference signals associated with the received positioning reference signal is not configured, this manner reduces redundancy in measurement quantities reported by the terminal device. For example, if the quantity of sent positioning reference signals associated with the received positioning reference signal is not configured, a positioning reference signal group that may further appear includes {SL-PRS #1, SL-PRS #2, SL-PRS #6}, {SL-PRS #1, SL-PRS #2, SL-PRS #4}, and a plurality of other combinations.

In addition, in the case shown in FIG. 8, if both the UE #1 and the UE #2 report measurement quantities corresponding to respective DS-RTT, for the UE #1, reported measurement quantities include:

$T_{UE-RX-PRS2}-T_{UE-TX-PRS1}$, $T_{UE-RX-PRS2}-T_{UE-TX-PRS3}$, $T_{UE-RX-PRS4}-T_{UE-TX-PRS3}$, $T_{UE-RX-PRS4}-T_{UE-TX-PRS5}$, $T_{UE-RX-PRS6}-T_{UE-TX-PRS5}$, and $T_{UE-RX-PRS6}-T_{UE-TX-PRS3}$.

For the UE #2, reported measurement quantities include:

$T_{UE-RX-PRS1}-T_{UE-TX-PRS2}$, $T_{UE-RX-PRS1}-T_{UE-TX-PRS4}$, $T_{UE-RX-PRS3}-T_{UE-TX-PRS2}$, $T_{UE-RX-PRS3}-T_{UE-TX-PRS4}$, $T_{UE-RX-PRS5}-T_{UE-TX-PRS4}$, and $T_{UE-RX-PRS5}-T_{UE-TX-PRS6}$.

$T_{UE-RX-PRS2}-T_{UE-TX-PRS1}$, $T_{UE-RX-PRS2}-T_{UE-TX-PRS3}$, $T_{UE-RX-PRS1}-T_{UE-TX-PRS2}$, and $T_{UE-RX-PRS3}-T_{UE-TX-PRS2}$ may be used by the network device to implement the DS-RTT. Similarly, $T_{UE-RX-PRS2}-T_{UE-TX-PRS3}$, $T_{UE-RX-PRS4}-T_{UE-}$

$T_{UE-TX-PRS3}$, $T_{UE-RX-PRS3}-T_{UE-TX-PRS2}$, and $T_{UE-RX-PRS3}-T_{UE-TX-PRS4}$ may be used by the network device to implement the DS-RTT. Similarly, $T_{UE-RX-PRS4}-T_{UE-TX-PRS3}$, $T_{UE-RX-PRS4}-T_{UE-TX-PRS5}$, $T_{UE-RX-PRS3}-T_{UE-TX-PRS4}$, and $T_{UE-RX-PRS5}-T_{UE-TX-PRS4}$ may be used by the network device to implement the DS-RTT. Similarly, $T_{UE-RX-PRS4}-T_{UE-TX-PRS5}$, $T_{UE-RX-PRS6}-T_{UE-TX-PRS5}$, $T_{UE-RX-PRS5}-T_{UE-TX-PRS4}$, and $T_{UE-RX-PRS5}-T_{UE-TX-PRS6}$ may be used by the network device to implement the DS-RTT. For both the UE #1 and the UE #2, only one measurement quantity (for example, $T_{UE-RX-PRS6}-T_{UE-TX-PRS3}$ reported by the UE #1 and $T_{UE-RX-PRS1}-T_{UE-TX-PRS4}$ reported by the UE #2) is not applied to the DS-RTT. In other words, to some extent, redundancy in measurement quantities reported by the terminal device can be reduced while a DS-RTT function is ensured.

In addition, in the case shown in Manner 1, to better ensure the DS-RTT function, configuration is performed separately by using different indication information from a perspective of a terminal device that sends the positioning reference signal and a terminal device that receives the positioning reference signal.

For example, the network device sends the first indication information to the first terminal device, where the first indication information indicates a sent positioning reference signal associated with the received positioning reference signal; and the network device sends second indication information to the second terminal device, where the second indication information indicates a received positioning reference signal associated with the sent positioning reference signal.

It should be understood that, if it is unnecessary to separately perform configuration from the perspective of the terminal device that sends the positioning reference signal and the terminal device that receives the positioning reference signal, the network device may send the first indication information to a plurality of terminal devices in a broadcast manner.

For ease of understanding, the following describes, with reference to a specific example, how to separately perform configuration from the perspective of the terminal device that sends the positioning reference signal and the terminal device that receives the positioning reference signal.

Example 2: As shown in FIG. 9, the LMF may configure, for the UE #1 by using a higher layer message, sent SL-PRSs associated with a received SL-PRS as two sent SL-PRSs that are nearest in time to the received SL-PRS. In addition, the LMF may configure, for the UE #2 by using a higher layer message, received SL-PRSs associated with a sent SL-PRS as two received SL-PRSs that are nearest in time to the sent SL-PRS. The UE #1 and the UE #2 may measure and report measurement quantities according to a rule configured by the higher layer message.

As shown in FIG. 9, for the UE #1, the received SL-PRS includes an SL-PRS #2, an SL-PRS #4, and an SL-PRS #6. Therefore, based on an indication of the higher layer message, a sent SL-PRS associated with the SL-PRS #2 includes an SL-PRS #1 and an SL-PRS #3, a sent SL-PRS associated with the SL-PRS #4 includes the SL-PRS #3 and an SL-PRS #5, and a sent SL-PRS associated with the SL-PRS #6 includes the SL-PRS #3 and the SL-PRS #5.

For the UE #2, the sent SL-PRS includes the SL-PRS #2, the SL-PRS #4, and the SL-PRS #6. Therefore, based on the indication of the higher layer message, a received SL-PRS associated with the SL-PRS #2 includes the SL-PRS #1 and the SL-PRS #3, a received SL-PRS associated with SL-PRS #4 includes the SL-PRS #3 and the SL-PRS #5, and a received SL-PRS associated with the SL-PRS #6 includes the SL-PRS #3 and the SL-PRS #5.

In the case shown in FIG. 9, for the UE #1 and the UE #2, a positioning reference signal group that may form the DS-RTT includes {SL-PRS #1, SL-PRS #2, SL-PRS #3}, {SL-PRS #3, SL-PRS #4, SL-PRS #5}, and {SL-PRS #3, SL-PRS #5, SL-PRS #6}. In comparison with a case in the conventional technologies in which the quantity of sent positioning reference signals associated with the received positioning reference signal is not configured, this manner reduces redundancy in measurement quantities reported by the terminal device.

In addition, in the case shown in FIG. 9, if both the UE #1 and the UE #2 report measurement quantities corresponding to respective DS-RTT, for the UE #1, reported measurement quantities include:

$T_{UE-RX-PRS2}-T_{UE-TX-PRS1}$, $T_{UE-RX-PRS2}-T_{UE-TX-PRS3}$, $T_{UE-RX-PRS4}-T_{UE-TX-PRS3}$, $T_{UE-RX-PRS4}-T_{UE-TX-PRS5}$, $T_{UE-RX-PRS6}-T_{UE-TX-PRS5}$, and $T_{UE-RX-PRS6}-T_{UE-TX-PRS3}$.

For the UE #2, reported measurement quantities include:

$T_{UE-RX-PRS1}-T_{UE-TX-PRS2}$, $T_{UE-RX-PRS3}-T_{UE-TX-PRS2}$, $T_{UE-RX-PRS3}-T_{UE-TX-PRS4}$, $T_{UE-RX-PRS5}-T_{UE-TX-PRS4}$, $T_{UE-RX-PRS5}-T_{UE-TX-PRS6}$, and $T_{UE-RX-PRS3}-T_{UE-TX-PRS6}$.

$T_{UE-RX-PRS2}-T_{UE-TX-PRS1}$, $T_{UE-RX-PRS2}-T_{UE-TX-PRS3}$, $T_{UE-RX-PRS1}-T_{UE-TX-PRS2}$, and $T_{UE-RX-PRS3}-T_{UE-TX-PRS2}$ may be used by the network device to implement the DS-RTT. Similarly, $T_{UE-RX-PRS2}-T_{UE-TX-PRS3}$, $T_{UE-RX-PRS4}-T_{UE-TX-PRS3}$, $T_{UE-RX-PRS3}-T_{UE-TX-PRS2}$, and $T_{UE-RX-PRS3}-T_{UE-TX-PRS4}$ may be used by the network device to implement the DS-RTT. Similarly, $T_{UE-RX-PRS4}-T_{UE-TX-PRS3}$, $T_{UE-RX-PRS4}-T_{UE-TX-PRS5}$, $T_{UE-RX-PRS3}-T_{UE-TX-PRS4}$, and $T_{UE-RX-PRS5}-T_{UE-TX-PRS4}$ may be used by the network device to implement the DS-RTT. Similarly, $T_{UE-RX-PRS4}-T_{UE-TX-PRS5}$, $T_{UE-RX-PRS6}-T_{UE-TX-PRS5}$, $T_{UE-RX-PRS5}-T_{UE-TX-PRS4}$, and $T_{UE-RX-PRS5}-T_{UE-TX-PRS6}$ may be used by the network device to implement the DS-RTT. Similarly, $T_{UE-RX-PRS6}-T_{UE-TX-PRS5}$, $T_{UE-RX-PRS6}-T_{UE-TX-PRS3}$, $T_{UE-RX-PRS5}-T_{UE-TX-PRS6}$, and $T_{UE-RX-PRS3}-T_{UE-TX-PRS6}$ may be used by the network device to implement the DS-RTT. All measurement quantities reported by both the UE #1 and the UE #2 may be applied to the DS-RTT. In other words, to some extent, redundancy in measurement quantities reported by the terminal device can be reduced while a DS-RTT function is ensured.

Manner 2: The first indication information indicates a quantity N1 of positioning reference signals that are associated with the first positioning reference signal and that are sent before the first positioning reference signal, and indicates a quantity N2 of positioning reference signals that are associated with the first positioning reference signal and that are sent after the first positioning reference signal. N1 and N2 are integers, a sum of N1 and N2 is a positive integer, and the second positioning reference signal is one of the sent positioning reference signals associated with the first positioning reference signal.

Alternatively,

the first indication information indicates a quantity N1 of positioning reference signals that are associated with the second positioning reference signal and that are received before the second positioning reference signal, and indicates a quantity N2 of positioning reference signals that are associated with the second positioning reference signal and that are received after the second positioning reference signal. N1 and N2 are integers, a sum of N1 and N2 is a positive integer, and the first positioning reference signal is one of the received positioning reference signals associated with the second positioning reference signal.

In the case shown in Manner 2, that the first indication information indicates the sent positioning reference signal associated with the received positioning reference signal may be that the first indication information separately indicates a positioning reference signal sent before the received positioning reference signal and a positioning reference signal sent after the received positioning reference signal. This is similar to the case shown in Manner 1. A difference lies in that in the case shown in Manner 2, parameters carried in the first indication information include N1 and N2.

Optionally, the N1 sent positioning reference signals associated with the first positioning reference signal are N1 sent positioning reference signals that are nearest in time before the first terminal device receives the first positioning reference signal, and the N2 sent positioning reference signals associated with the first positioning reference signal are N2 sent positioning reference signals that are nearest in time after the first terminal device receives the first positioning reference signal.

Optionally, the N1 received positioning reference signals associated with the second positioning reference signal are N1 received positioning reference signals that are nearest in time before the first terminal device sends the second positioning reference signal, and the N2 received positioning reference signals associated with the second positioning reference signal are N2 received positioning reference signals that are nearest in time after the first terminal device sends the second positioning reference signal.

Manner 3: The first indication information includes a bitmap. The bitmap includes Q bits. The Q bits correspond to Q positioning reference signals. The bitmap indicates the sent positioning reference signal associated with the first positioning reference signal, and the second positioning reference signal is one of positioning reference signals that are in the Q positioning reference signals and whose corresponding bit values are a first value; or the bitmap indicates the received positioning reference signal associated with the second positioning reference signal, and the first positioning reference signal is one of positioning reference signals that are in the Q positioning reference signals and whose corresponding bit values are a first value.

The first value is 0 or 1.

For ease of understanding, the following describes, in the case shown in Manner 3 with reference to a specific example, how to configure, by using the bitmap, a sent positioning reference signal associated with the received positioning reference signal, or how to configure, by using the bitmap, a received positioning reference signal associated with the sent positioning reference signal.

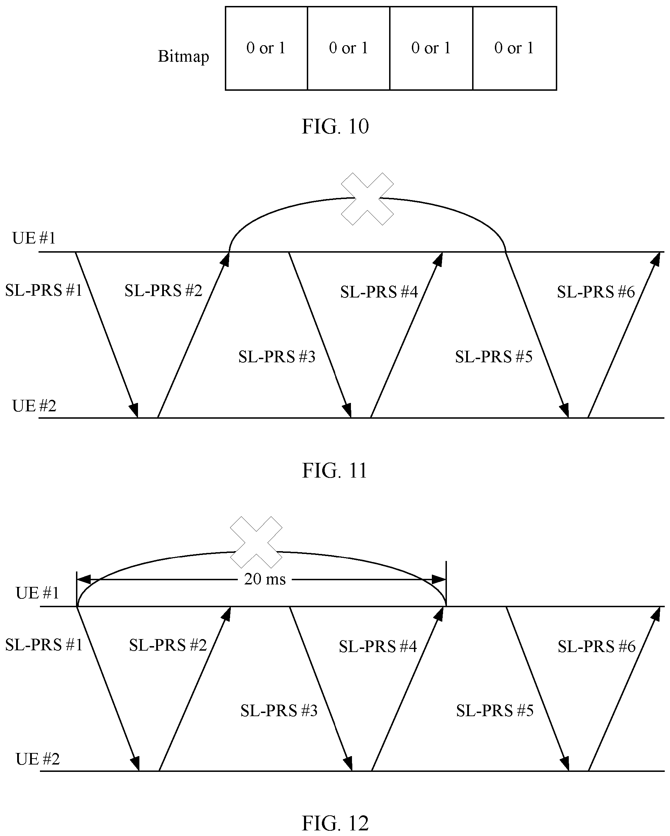

Example 3: As shown in FIG. 10, the bitmap includes four bits. A 1st bit indicates a 2nd SL-PRS sent earlier than the received positioning reference signal, a 2nd bit indicates a 1st SL-PRS sent earlier than the received positioning reference signal, a 3rd bit indicates a 1st SL-PRS sent later than the received positioning reference signal, and a 4th bit indicates a 2nd SL-PRS sent later than the received positioning reference signal. Alternatively, a 1st bit to a 4th bit indicate four SL-PRSs sent earlier than the received positioning reference signal; or a 1st bit to a 4th bit indicate four SL-PRSs sent later than the received positioning reference signal.

Optionally, a bit value being 1 indicates association (or binding), to be specific, the received positioning reference signal and a measurement quantity of a sent positioning reference signal corresponding to the bit need to be obtained. A bit value being 0 indicates no association, to be specific, the received positioning reference signal and a measurement quantity of a sent positioning reference signal corresponding to the bit do not need to be obtained.

Manner 4: The first indication information indicates that a quantity of positioning reference signals received or sent by the first terminal device between the first positioning reference signal and the second positioning reference signal is less than or equal to a first threshold.

For ease of understanding, the following describes, in the case shown in Manner 4 with reference to a specific example, how the network device configures, by using indication information (for example, the first indication information), a condition in which a quantity of positioning reference signals between sent positioning reference signals associated with the received positioning reference signal is met.

Example 4: As shown in FIG. 11, the LMF may configure, for the UE #1 by using a higher layer message, that a quantity of SL-PRSs between the first positioning reference signal and the second positioning reference signal that are associated with the first measurement quantity is 1 (where the counting herein does not include the first positioning reference signal and the second positioning reference signal that are associated with the first measurement quantity). In this case, the UE #1 does not report a measurement quantity whose associated positioning reference signal is {SL-PRS #2, SL-PRS #5}. This is because a quantity of SL-PRSs between the SL-PRS #2 and the SL-PRS #5 is 2.

Manner 5: The first indication information indicates that a time interval between the first positioning reference signal and the second positioning reference signal is less than or equal to a second threshold.

For ease of understanding, the following describes, in the case shown in Manner 5 with reference to a specific example, how the network device configures, by using indication information (for example, the first indication information), a condition that a time interval between sent positioning reference signals associated with the received positioning reference signal is met.

Example 5: As shown in FIG. 12, the LMF may configure, for the UE #1 by using a higher layer message, a time interval, for example, maximum time T, between the first positioning reference signal and the second positioning reference signal that are associated with the first measurement quantity (where the interval may be converted based on a slot in which two PRSs are located). If it is configured for the UE #1 that the maximum interval between the first positioning reference signal and the second positioning reference signal that are associated with the first measurement quantity is T=10 ms, the UE #1 does not report a measurement quantity whose associated positioning reference signal is {SL-PRS #1, SL-PRS #4}. This is because an interval between the SL-PRS #1 and the SL-PRS #4 is 20 ms.

Manner 6: The first indication information may be further used for determining a first time window. The positioning reference signals associated with the first measurement quantity are within the first time window. The first time window is one of M time windows. M is a positive integer. The first indication information indicates at least one of the following information: a window length of the first time window, a total quantity M of time windows, or a start moment of the first time window.

In the case shown in Manner 6, the first time window may be determined by using the first indication information. When the first time window is determined, positioning reference signals associated with the first measurement quantity are selected from the first time window.

For example, a start moment of the M time windows is a moment at which the first terminal device receives the first indication information; and an end moment of the M time windows is a moment at which the first terminal device reports the first measurement quantity.

For example, the start moment of the M time windows is a moment at which the first terminal device receives a request message, and the end moment of the M time windows is a moment obtained by delaying, by response time, the moment at which the first terminal device receives the request message. The request message is used for requesting the first terminal device to report the first measurement quantity. The request message includes response time information. The response time information indicates to report the first measurement quantity within the response time after the request message is received. The request message may be sent by the network device and/or the second terminal device.

For example, the first indication information may be used for configuring that a range of an M$^{th}$ time window is [moment at which the first indication information is received+(M-1)*window length, moment at which the first indication information is received+M* window length].

For another example, the first indication information may indicate the window length of the first time window by configuring a quantity of time windows. For example, the first indication information indicates that the quantity of time windows is N, a total window length of the M time windows is response time (response time) (for example, response time indicated by the response time information carried in the request message), and a window length of each time window is response time/N.

For still another example, the first indication information may be used for configuring specific time of the first time window. For example, the first indication information indicates that start time of the first time window is T1, and end time is configured as T2.

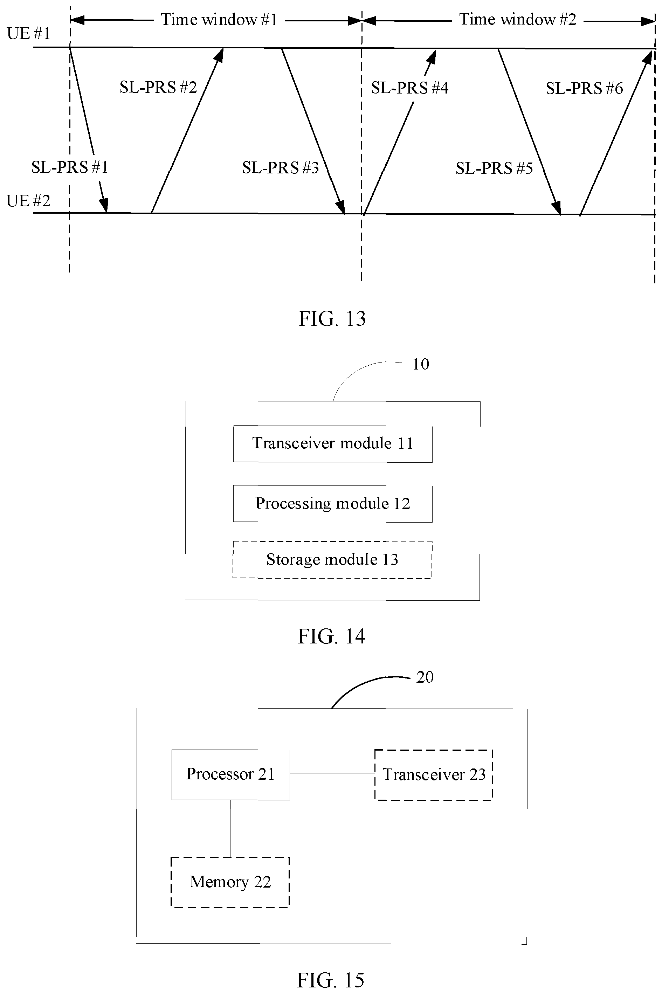

As shown in FIG. 13, two time windows are set, to implement association between a received SL-PRS and a sent SL-PRS in a same time window. For example, an SL-PRS #1 is associated with an SL-PRS #2 and an SL-PRS #3 within a time window #1. For another example, an SL-PRS #4 is associated with an SL-PRS #5 and an SL-PRS #6 within a time window #2.

In the method for positioning shown in FIG. 7, the first indication information is used for determining the positioning reference signals associated with the first measurement quantity. Therefore, after determining, based on the first indication information, the positioning reference signals associated with the first measurement quantity, the first terminal device may measure the positioning reference signals associated with the first measurement quantity, to obtain and report the first measurement quantity, so as to avoid, when the terminal device cannot learn of the positioning reference signals associated with the measurement quantity, redundancy in reported measurement quantities caused by the terminal device determining the positioning reference signals associated with the measurement quantity.

It should be noted that the foregoing Manner 1 to Manner 6 are merely examples, and do not constitute any limitation on the protection scope of this application. The first indication information may alternatively specify, in another manner, a requirement that positioning reference signals associated with a measurement quantity meet. Examples are not described herein one by one.

In addition, the foregoing Manner 1 to Manner 6 may be used in combination. For example, the network device may indicate, by using the first indication information, both the foregoing time window and the foregoing time interval between the received positioning reference signal and the sent positioning reference signal that are associated with the measurement quantity. For another example, the network device may indicate, by using the first indication information, a quantity of positioning reference signals between the positioning reference signal and the sent positioning reference signal, a time interval between the received positioning reference signal and the sent positioning reference signal that are associated with the measurement quantity, and the like. A rule combination that can be indicated by the indication information is not described herein again. Alternatively, the network device may separately indicate the foregoing Manner 1 to Manner 6 by using different indication information. Details are not described herein.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the devices (for example, the first device and the second device) may alternatively be implemented by a component (for example, a chip or a circuit) of the device.

It may be further understood that, in embodiments of this application, interaction between the network device and the terminal device is mainly used as an example for description. This application is not limited thereto. The terminal device may be replaced with a receive end device, and the network device may be replaced with a sending device. For example, a "first terminal device" may be replaced with a "first device", and a "second terminal device" may be replaced with a "second device".

It may be further understood that, in some scenarios, some optional features in embodiments of this application may be independently implemented without depending on another feature. Alternatively, in some scenarios, the optional features are combined with another feature. This is not limited.

The above describes in detail the method for positioning provided in embodiments of this application with reference to FIG. 7. The foregoing method for positioning is mainly described from a perspective of interaction between the network device and the terminal device. It may be understood that to implement the foregoing functions, the network device and the terminal device include corresponding hardware structures and/or software modules for implementing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes outside the scope of this application.

The following describes in detail apparatuses for positioning provided in embodiments of this application with reference to FIG. 14 to FIG. 16. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 14 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the first terminal device in the foregoing method embodiments, or may be a component (for example, a chip) of the first terminal device.

The apparatus 10 may implement corresponding steps or procedures performed by the first terminal device in the foregoing method embodiments. The transceiver module 11 may be configured to perform receiving and sending related operations of the first terminal device in the foregoing method embodiments. The processing module 12 may be configured to perform a processing related operation of the first terminal device in the foregoing method embodiments.

In a possible implementation, the transceiver module 11 is configured to receive first indication information, where the first indication information is used for determining positioning reference signals associated with a first measurement quantity, and the first measurement quantity is used for determining a distance between a first terminal device and a second terminal device. The processing module 12 is configured to: determine, based on the first indication information, the positioning reference signals associated with the first measurement quantity, and measure the positioning reference signals associated with the measurement quantity, to obtain the first measurement quantity, where the positioning reference signals associated with the first measurement quantity include a first positioning reference signal received by the first terminal device and a second positioning reference signal sent by the first terminal device.

When the apparatus 10 is configured to perform the method in FIG. 7, the transceiver module 11 may be configured to perform steps of receiving and sending information in the method, for example, step S710; and the processing module 12 may be configured to perform a processing step in the method, for example, step S720.

It should be understood that a specific process in which the units perform the foregoing corresponding steps is described in detail in the foregoing method embodiments, and for brevity, details are not described herein.

In another design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform a processing related operation of the network device in the foregoing method embodiments.

In a possible implementation, the processing module 12 is configured to generate first indication information, where the first indication information is used for determining positioning reference signals associated with a first measurement quantity, and the first measurement quantity is used for determining a distance between a first terminal device and a second terminal device. The transceiver module 11 is configured to send the first indication information, where the positioning reference signals associated with the first measurement quantity include a first positioning reference signal received by the first terminal device and a second positioning reference signal sent by the first terminal device.

When the apparatus 10 is configured to perform the method in FIG. 7, the transceiver module 11 may be configured to perform steps of receiving and sending information in the method, for example, step S710; and the processing module 12 may be configured to perform a processing step in the method.

It should be understood that a specific process in which the units perform the foregoing corresponding steps is described in detail in the foregoing method embodiments, and for brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by a device (for example, the terminal device or the network device) in the foregoing methods. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

FIG. 15 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 15, the apparatus 20 further includes the memory 22, and the memory 22 is configured to store a computer program or instructions and/or data. The memory 22 and the processor 21 may be integrated together, or may be disposed separately. Optionally, there are one or more memories 22.

Optionally, as shown in FIG. 15, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement operations performed by the terminal device or the network device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

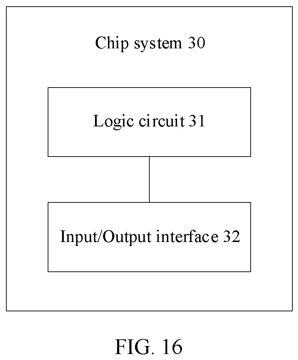

FIG. 16 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the terminal device or the network device in the foregoing method embodiments.

For example, the logic circuit 31 is configured to implement processing related operations performed by the terminal device in the foregoing method embodiments, and the input/output interface 32 is configured to implement sending and/or receiving related operations performed by the terminal device in the foregoing method embodiments.

An embodiment of this application further provides a computer-readable storage medium. The computer-readable storage medium stores computer instructions for implementing the methods performed by the device in the foregoing method embodiments.

For example, when the computer instructions are executed by a computer, the computer is caused to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device or network device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for positioning, comprising:

   receiving first indication information, wherein the first indication information is used for determining positioning reference signals associated with a first measurement quantity, and the first measurement quantity is used for determining a distance between a first terminal device and a second terminal device; and
   determining, based on the first indication information, the positioning reference signals associated with the first measurement quantity, and measuring the positioning reference signals associated with the measurement quantity, to obtain the first measurement quantity, wherein
   the positioning reference signals associated with the first measurement quantity comprise a first positioning reference signal received by the first terminal device and a second positioning reference signal sent by the first terminal device.

2. The method according to claim 1, wherein the first indication information indicates a quantity N of sent positioning reference signals associated with the first positioning reference signal, and the second positioning reference signal is one of the sent positioning reference signals associated with the first positioning reference signal; or

   the first indication information indicates a quantity N of received positioning reference signals associated with the second positioning reference signal, and the first positioning reference signal is one of the received positioning reference signals associated with the second positioning reference signal, wherein N is a positive integer.

3. The method according to claim 2, wherein the sent positioning reference signals associated with the first positioning reference signal are N sent positioning reference signals that are nearest in time to the first positioning reference signal received by the first terminal device; and
the received positioning reference signals associated with the second positioning reference signal are N received positioning reference signals that are nearest in time to the second positioning reference signal sent by the first terminal device.

4. The method according to any one of claims 1 to 3, wherein the first indication information indicates a quantity N1 of positioning reference signals that are associated with the first positioning reference signal and that are sent before the first positioning reference signal, and indicates a quantity N2 of positioning reference signals that are associated with the first positioning reference signal and that are sent after the first positioning reference signal, wherein N1 and N2 are integers, a sum of N1 and N2 is a positive integer, and the second positioning reference signal is one of the sent positioning reference signals associated with the first positioning reference signal.

5. The method according to any one of claims 1 to 3, wherein the first indication information indicates a quantity N1 of positioning reference signals that are associated with the second positioning reference signal and that are received before the second positioning reference signal, and indicates a quantity N2 of positioning reference signals that are associated with the second positioning reference signal and that are received after the second positioning reference signal, wherein N1 and N2 are integers, a sum of N1 and N2 is a positive integer, and the first positioning reference signal is one of the received positioning reference signals associated with the second positioning reference signal.

6. The method according to any one of claims 1 to 5, wherein the first indication information comprises a bitmap, the bitmap comprises Q bits, and the Q bits correspond to Q positioning reference signals; and

the bitmap indicates the sent positioning reference signal associated with the first positioning reference signal, and the second positioning reference signal is one of positioning reference signals that are in the Q positioning reference signals and whose corresponding bit values are a first value; or
the bitmap indicates the received positioning reference signal associated with the second positioning reference signal, and the first positioning reference signal is one of positioning reference signals that are in the Q positioning reference signals and whose corresponding bit values are a first value.

7. The method according to any one of claims 1 to 6, wherein the first indication information indicates that a quantity of positioning reference signals received or sent by the first terminal device between the first positioning reference signal and the second positioning reference signal is less than or equal to a first threshold.

8. The method according to any one of claims 1 to 7, wherein the first indication information indicates that a time interval between the first positioning reference signal and the second positioning reference signal is less than or equal to a second threshold.

9. The method according to any one of claims 1 to 8, wherein the first indication information is further used for determining a first time window, the positioning reference signals associated with the first measurement quantity are within the first time window, and the first time window is one of M time windows, wherein M is a positive integer; and
the first indication information further indicates at least one of the following information:
a window length of the first time window, a total quantity M of time windows, or a start moment of the first time window.

10. The method according to claim 9, wherein a start moment of the M time windows is a moment at which the first indication information is received; and an end moment of the M time windows is a moment at which the first measurement quantity is reported.

11. The method according to any one of claims 1 to 10, wherein the first indication information is carried in a radio resource control RRC message, an LTE positioning protocol LPP message, or a sidelink positioning protocol SLPP message.

12. A method for positioning, comprising:

generating first indication information, wherein the first indication information is used for determining positioning reference signals associated with a first measurement quantity, and the first measurement quantity is used for determining a distance between a first terminal device and a second terminal device; and

sending the first indication information, wherein

the positioning reference signals associated with the first measurement quantity comprise a first positioning reference signal received by the first terminal device and a second positioning reference signal sent by the first terminal device.

13. The method according to claim 12, wherein the first indication information indicates a quantity N of sent positioning reference signals associated with the first positioning reference signal, and the second positioning reference signal is one of the sent positioning reference signals associated with the first positioning reference signal; or

the first indication information indicates a quantity N of received positioning reference signals associated with the second positioning reference signal, and the first positioning reference signal is one of the received positioning reference signals associated with the second positioning reference signal, wherein

N is a positive integer.

14. The method according to claim 13, wherein the sent positioning reference signals associated with the first positioning reference signal are N sent positioning reference signals that are nearest in time to the first positioning reference signal received by the first terminal device; and

the received positioning reference signals associated with the second positioning reference signal are N received positioning reference signals that are nearest in time to the second positioning reference signal sent by the first terminal device.

15. The method according to any one of claims 12 to 14, wherein the first indication information indicates a quantity N1 of positioning reference signals that are associated with the first positioning reference signal and that are sent before the first positioning reference signal, and indicates a quantity N2 of positioning reference signals that are associated with the first positioning reference signal and that are sent after the first positioning reference signal, wherein N1 and N2 are integers, a sum of N1 and N2 is a positive integer, and the second positioning reference signal is one of the sent positioning reference signals associated with the first positioning reference signal.

16. The method according to any one of claims 12 to 14, wherein the first indication information indicates a quantity N1 of positioning reference signals that are associated with the second positioning reference signal and that are received before the second positioning reference signal, and indicates a quantity N2 of positioning reference signals that are associated with the second positioning reference signal and that are received after the second positioning reference signal, wherein N1 and N2 are integers, a sum of N1 and N2 is a positive integer, and the first positioning reference signal is one of the received positioning reference signals associated with the second positioning reference signal.

17. The method according to any one of claims 12 to 16, wherein the first indication information comprises a bitmap, the bitmap comprises Q bits, and the Q bits correspond to Q positioning reference signals; and

the bitmap indicates the sent positioning reference signal associated with the first positioning reference signal, and the second positioning reference signal is one of positioning reference signals that are in the Q positioning reference signals and whose corresponding bit values are a first value; or

the bitmap indicates the received positioning reference signal associated with the second positioning reference signal, and the first positioning reference signal is one of positioning reference signals that are in the Q positioning reference signals and whose corresponding bit values are a first value.

18. The method according to any one of claims 12 to 17, wherein the first indication information indicates that a quantity of positioning reference signals received or sent by the first terminal device between the first positioning reference signal and the second positioning reference signal is less than or equal to a first threshold.

19. The method according to any one of claims 12 to 18, wherein the first indication information indicates that a time interval between the first positioning reference signal and the second positioning reference signal is less than or equal to a second threshold.

20. The method according to any one of claims 12 to 19, wherein the first indication information is further used for determining a first time window, the positioning reference signals associated with the first measurement quantity are within the first time window, and the first time window is one of M time windows, wherein M is a positive integer; and

the first indication information further indicates at least one of the following information:
a window length of the first time window, a total quantity M of time windows, or a start moment of the first time window.

21. The method according to claim 20, wherein a start moment of the M time windows is a moment at which the first terminal device receives the first indication information; and
an end moment of the M time windows is a moment at which the first terminal device reports the first measurement quantity.

22. The method according to any one of claims 12 to 21, wherein the first indication information is carried in a radio resource control RRC message, an LTE positioning protocol LPP message, or a sidelink positioning protocol SLPP message.

23. A communication apparatus, wherein the communication apparatus comprises a processor and a memory, the processor is coupled to the memory, the memory is configured to store a computer program, and when the processor runs the computer program, the communication apparatus is caused to perform the method according to any one of claims 1 to 11, or the communication apparatus is caused to perform the method according to any one of claims 12 to 22.

24. A computer-readable storage medium, wherein the computer-readable storage medium stores computer instructions, and when the computer instructions are run on a communication apparatus, the communication apparatus is caused to perform the method according to any one of claims 1 to 11, or the communication apparatus is caused to perform the method according to any one of claims 12 to 22.

25. A computer program product, comprising instructions, wherein when the instructions are run on a communication apparatus, the communication apparatus is caused to perform the method according to any one of claims 1 to 11, or the communication apparatus is caused to perform the method according to any one of claims 12 to 22.

26. A chip, wherein the chip comprises a processor and a communication interface, the processor reads and runs instructions through the communication interface, and when the chip is installed in a communication apparatus, the communication apparatus is caused to perform the method according to any one of claims 1 to 11, or the communication apparatus is caused to perform the method according to any one of claims 12 to 22.

27. A communication system, wherein the communication system comprises a terminal device and a network device, the terminal device is configured to perform the method according to any one of claims 1 to 11, and the network device is configured to perform the method according to any one of claims 12 to 22.

100

Terminal
device 110

Terminal
device 120

FIG. 1

Device #A                    Device #B

PRS #1

$t_{round}$

$t_{reply}$

PRS #2

FIG. 2

$T_{round1}$                    $T_{reply2}$

Device #A                                            time

M#1                    M#2                    M#3

$T_{prop}$            $T_{prop}$            $T_{prop}$

Device #B

$T_{reply1}$                    $T_{round2}$

FIG. 3

Device #A          Device #B

$t_1$

PRS

$t_2$

$t_{14}$

$t_{23}$

$t_4$          PRS          $t_3$

$t_{45}$          $t_{36}$

$t_6$

PRS

$t_5$

FIG. 4

———— SL-PRS          .............. Transmit subframe
boundary

Device #A

SL-PRS #1          SL-PRS #3

SL-PRS #2

Device #B

Receive-transmit          Receive-transmit
time difference          time difference

FIG. 5

Device #A

SL-PRS #1     SL-PRS #2          SL-PRS #4          SL-PRS #6

SL-PRS #3          SL-PRS #5

Device #B

FIG. 6

Network device

First terminal device

— S710: First indication information →

S720: Determine, based on the first indication information, positioning reference signals associated with a first measurement quantity

FIG. 7

UE #2

SL-PRS #2

SL-PRS #4

SL-PRS #6

SL-PRS #1

SL-PRS #3

SL-PRS #5

UE #2

FIG. 8

UE #2

SL-PRS #2

SL-PRS #4

SL-PRS #6

SL-PRS #1

SL-PRS #3

SL-PRS #5

UE #2

FIG. 9

| Bitmap | 0 or 1 | 0 or 1 | 0 or 1 | 0 or 1 |
|---|---|---|---|---|

FIG. 10

UE #1

SL-PRS #1    SL-PRS #2    SL-PRS #4    SL-PRS #6

SL-PRS #3    SL-PRS #5

UE #2

FIG. 11

UE #1

SL-PRS #1    SL-PRS #2    SL-PRS #4    SL-PRS #6

20 ms

SL-PRS #3    SL-PRS #5

UE #2

FIG. 12

UE #1

Time window #1 — Time window #2

SL-PRS #2

SL-PRS #4

SL-PRS #6

SL-PRS #1

SL-PRS #3

SL-PRS #5

UE #2

FIG. 13

10

Transceiver module 11

Processing module 12

Storage module 13

FIG. 14

20

Processor 21 — Transceiver 23

Memory 22

FIG. 15

Chip system 30

Logic circuit 31

Input/Output interface 32

FIG. 16

## INTERNATIONAL SEARCH REPORT

| International application No. |
|---|
| **PCT/CN2024/107017** |

| A. | CLASSIFICATION OF SUBJECT MATTER |
|---|---|

H04W4/02(2018.01)i

According to International Patent Classification (IPC) or to both national classification and IPC

| B. | FIELDS SEARCHED |
|---|---|

Minimum documentation searched (classification system followed by classification symbols)

IPC:H04W; H04L

Documentation searched other than minimum documentation to the extent that such documents are included in the fields searched

Electronic data base consulted during the international search (name of data base and, where practicable, search terms used)

CNABS, CNTXT, CJFD, ENTXTC, ENTXT, DWPI, 3GPP: 上行定位参考信号, 下行定位参考信号, 定位参考信号对, 距离, 时间差, PRS, UL, DL, pair, distance, time difference

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111586832 A (CHENGDU HUAWEI TECHNOLOGIES CO., LTD.) 25 August 2020 (2020-08-25) <br> description, paragraphs 0096-0126 | 1-27 |
| A | CN 116458098 A (GUANGDONG OPPO MOBILE COMMUNICATIONS CO., LTD.) 18 July 2023 (2023-07-18) <br> entire document | 1-27 |
| A | WO 2021227644 A1 (DATANG MOBILE COMMUNICATIONS EQUIPMENT CO., LTD.) 18 November 2021 (2021-11-18) <br> entire document | 1-27 |
| A | WO 2022078311 A1 (VIVO MOBILE COMMUNICATION CO., LTD.) 21 April 2022 (2022-04-21) <br> entire document | 1-27 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 September 2024** | **10 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/107017**

| Patent document cited in search report | | | Publication date (day/month/year) | Patent family member(s) | Publication date (day/month/year) |
|---|---|---|---|---|---|
| CN | 111586832 | A | 25 August 2020 | None | |
| CN | 116458098 | A | 18 July 2023 | None | |
| WO | 2021227644 | A1 | 18 November 2021 | None | |
| WO | 2022078311 | A1 | 21 April 2022 | None | |

Form PCT/ISA/210 (patent family annex) (July 2022

**EP 4 770 140 A1**

## REFERENCES CITED IN THE DESCRIPTION

### Patent documents cited in the description

- CN 202311214686X